Europäisches Patentamt

(19) European Patent Office

Office européen des brevets

(11) **EP 0 849 109 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(51) Int Cl.$^7$: **B60K 31/00**

(21) Anmeldenummer: **97120711.3**

(22) Anmeldetag: **26.11.1997**

(54) **Verfahren und Anordnung zur vorausschauenden Bestimmung eines Fahrkorridors einer Kraftfahrzeuges**

Method and device for a look ahead determination of a drive curve of a motor vehicle

Procédé et dispositif pour la détermination prédictive d'un courbe à conduire pour un véhicule à moteur

(84) Benannte Vertragsstaaten:
**DE FR GB**

(30) Priorität: **20.12.1996 DE 19653258**
**07.11.1997 DE 19749306**

(43) Veröffentlichungstag der Anmeldung:
**24.06.1998 Patentblatt 1998/26**

(73) Patentinhaber: **Siemens Aktiengesellschaft**
**80333 München (DE)**

(72) Erfinder:
• **Säger, Peter**
**61381 Friedrichsdorf (DE)**
• **Landsiedel, Thomas**
**61449 Steinbach (DE)**

(56) Entgegenhaltungen:
DE-A- 4 111 614      DE-A- 4 112 582
DE-A- 4 201 146      DE-A- 4 208 012

**Beschreibung**

Die Erfindung betrifft ein Verfahren zur vorausschauenden Bestimmung des Fahrkorridors eines Kraftfahrzeuges für ein automatisches Abstandsregelsystem, bei welchem ein der Geschwindigkeit entsprechendes Signal zur Bestimmung eines Kurvenradius des Kraftfahrzeuges verwendet wird, wobei aus dem Kurvenradius der Fahrkorridor ermittelt wird sowie eine Anordnung zur Durchführung des Verfahrens.

Ein Verfahren gemäß dem Oberbegriff von Anspruch 1 ist aus der DE 4208012A1 bekannt. In automatischen Geschwindigkeits- und Abstandsregelungssystemen zur Erfassung der Verkehrssitiuation ist es üblich, mit Hilfe von Signalen von Gierratensensoren bzw. Querbeschleunigungssensoren einen Fahrkorridor vorauszusagen. Das heißt, es wird festgestellt, an welcher Stelle sich das Fahrzeug nach Ablauf eines vorgegebenen Zeitraumes aufhalten wird und welche vorausfahrenden Fahrzeuge sich im Fahrkorridor des eigenen Fahrzeuges aufhalten.

Der Fahrkorridor wird dabei aus dem Kurvenradius des Kraftfahrzeuges bestimmt, welcher widerum aus der Fahrzeuggeschwindigkeit und dem Signal des Gierratensensors hergeleitet wird.

Die Verwendung des Gierratensensor liefert aber gegenwärtig keine ausreichenden Informationen zur Fahrdynamik des Kraftfahrzeuges. Diese muß durch zusätzliche Sensoren detektiert werden.

Der Erfindung liegt somit die Aufgabe zugrunde ein Verfahren zur genauen Bestimmung des Fahrkorridors des Kraftfahrzeuges anzugeben, bei welchem die Fahrdynamik des Kraftfahrzeuges ausreichend berücksichtigt wird.

Erfindungsgemäß wird die Aufgabe durch die Merkmale des Anspruchs 1 gelöst; die Radgeschwindigkeiten von zwei Fahrzeugrädern der Vorderachse werden gemessen und aus der Differenz der beiden Radgeschwindigkeiten wird die Gierrate des Fahrzeuges bestimmt.

Der Vorteil der Erfindung besteht darin, daß durch die Messung der Radgeschwindigkeiten der tatsächliche Geschwindigkeitsunterschied der beiden Fahrzeugräder in die Bestimmung des Fahrkorridors eingeht. Dieser kann somit sehr genau bestimmt werden, da die Fahrdynamik auf diese Art und Weise direkt berücksichtigt wird.

Vorteilhafterweise wird ein der Radgeschwindigkeit entsprechendes Signal durch die Abtastung von am Umfang des Fahrzeugrades vorhandenen Unstetigkeiten erzeugt.

Diese Vorgehensweise erlaubt eine genaue Bestimmung der Radgeschwindigkeit, da Herstellungstoleranzen der Inkrementscheibe und Unrundheiten von Reifen und Felgen als Störung nicht mit eingehen und somit zuverlässig der Fahrkorridor des Kraftfahrzeuges bestimmt werden kann.

In einer Ausführung wird bei der Detektion jeder Unstetigkeit ein elektrischer Impuls erzeugt und gezählt und ein Zeitraum bestimmt, in welchem die Impulse aller Unstetigkeiten des umlaufenden Bauteiles genau einmal gezählt werden und daraus die Radgeschwindigkeit ermittelt wird.

Vorteilhafterweise wird so die Radgeschwindigkeit aus der Zeit für eine komplette Radumdrehung ermittelt.

Trotz der Eliminierung der Herstellungstoleranzen und Radunrundheiten wird so ein ausreichend dynamisches Signal erhalten, das eine zuverlässige Bestimmung des Fahrkorridors auf der Grundlage der tatsächlich gemessenen Radgeschwindigkeit gewährleistet.

In einer Ausgestaltung werden die die Unstetigkeiten repräsentierenden Impulse in Gruppen eingeteilt und bei Auftreten des ersten Impulses einer jeden Gruppe eine neue Zeitmessung durch Zählung der Impulse über alle Unstetigkeiten ausgelöst. Dabei sind die die Unstetigkeiten repräsentierenden Impulse in Gruppen gleicher Anzahl zusammengefaßt.

Dies erlaubt insbesondere bei kleinen Geschwindigkeiten eine schnellere Erkennung der Radgeschwindigkeit. Auch werden Änderungen der Geschwindigkeit so schneller und sicher detektiert.

In einer Weiterbildung wird nach dem Auftreten des Impulses der ersten Unstetigkeit einer jeden Gruppe eine Zeitinformation abgespeichert, nach dem wiederholten Auftreten des Impulses dieser ersten Unstetigkeit einer jeden Gruppe eine zweite Zeitinformation bestimmt, welche mit der ersten Zeitinformation verglichen wird und die Differenz der beiden Zeitinformationen zur Bestimmung der Radgeschwindigkeit genutzt wird. Dabei wird beim Auftreten der zweiten Zeitinformation die erste Zeitinformation gelöscht und die zweite Zeitinformation abgespeichert.

Dadurch werden nur die augenblicklich interessanten Zeitinformationen gespeichert und so ein geringer Bedarf an Speicherkapazität gewährleistet.

Bei einer Anordnung zur Durchführung des Verfahrens ist mindestens zwei Rädern des Kraftfahrzeuges je ein Inkrementgeber zugeordnet, dem gegenüber ein Signalsensor angeordnet ist, der das jeweilige der Geschwindigkeit des Rades entsprechende Signal detektiert, wobei dieser Sensor mit einem dem Fahrkorridor des Kraftfahrzeuges bestimmenden Steuergerät verbunden ist und das Steuergerät einen Speicher mit mehreren Registern aufweist, welcher vom Signal eines Zählers steuerbar ist.

Die Register nehmen dabei den Inhalt eines als Zählers arbeitenden Timers an.

Der Timer ist vorzugsweise der im Mikroprozessor enthaltene Taktgeber.

An jedem Fahrzeugrad ist ein Inkrementgeber angeordnet, dem gegenüber jeweils ein mit dem Steuergerät verbundener Sensor angeordnet ist und das Steuergerät aus allen Signalen den Fahrzeugkorridor für eine vorgegebene Zeit bestimmt.

Die Bestimmung der Radgeschwindigkeiten an jedem Rad des Kraftfahrzeuges ist besonders bedeutungsvoll für die Vorausbestimmung von Kurvenfahrten.

Die Erfindung läßt zahlreiche Ausführungsbeispiele zu. Eines davon soll anhand der in der Zeichnung dargestellten Figuren näher erläutert werden.

Es zeigt

Fig. 1:     erste Anordnung zur Bestimmung des Fahrkorridors über die Radgeschwindigkeit

Fig. 2:     Algorithmus zur Bestimmung der Radgeschwindigkeit

Fig. 3:     zweite Anordnung zur Bestimmung des Fahrkorridors

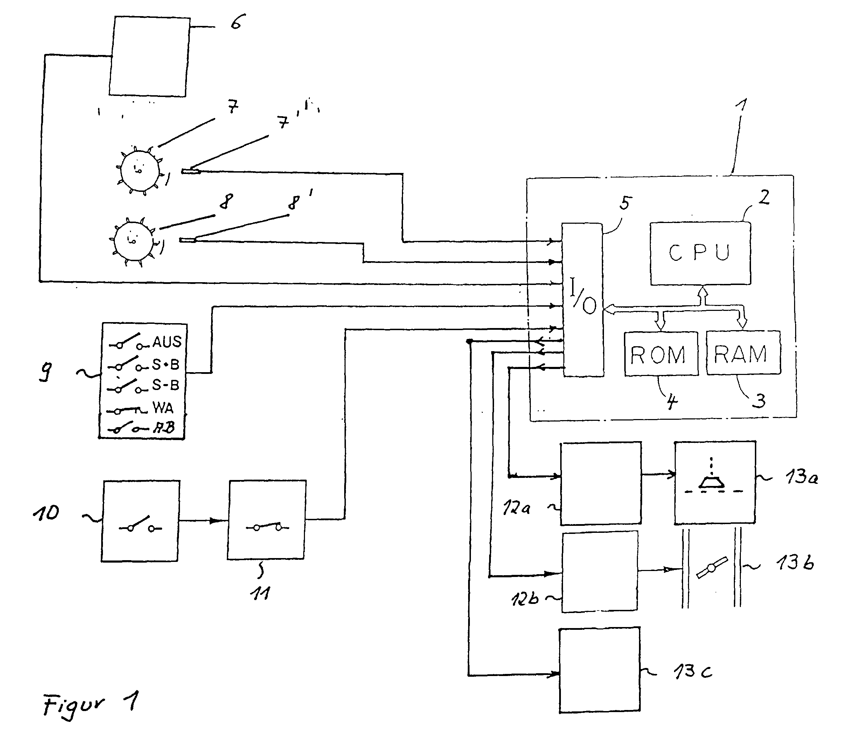

In Figur 1 ist ein automatisches Geschwindigkeits- und Abstandsregelsystem zur Einhaltung des Sicherheitsabstandes von Fahrzeugen untereinander dargestellt, welches an der Stoßstange des Fahrzeuges angeordnet ist. Ein leistungsstarker Mikrorechner 1, bestehend aus einer zentralen Recheneinheit 2, einem Arbeitsspeicher 3, einem Festwertspeicher 4 sowie einer Ein-/Ausgabeeinheit 5 erhält dabei von einem Radar- oder Lasersensor 6 ein Signal, das Informationenen über den Abstand zu mindestens einem vorausfahrenden Fahrzeug mißt.

Inkrementscheiben 7 und 8 sind an den jeweils beiden nicht weiter dargestellten Vorderrädern des Kraftfahrzeuges angeordnet und werden hinsichtlich der Drehzahl von Radsensoren 7', 8', die den Inkrementscheiben 7 und 8 gegenüberliegend angeordnet sind, abgetastet. Diese Drehzahlsignale werden ebenfalls über die Ein- und Ausgabeeinheit 5 dem Mikrorechner 1 zugeführt. Die Radsensoren können Induktivgeber oder Hallsensoren sein.

Der Mikroprozessor 1 berechnet aus dem vom Radarsensor 6 gelieferten Signalen (Abstandssignal und Relativgeschwindigkeitssignal) und mit Hilfe der Radgeschwindigkeiten die Geschwindigkeitsdifferenz zwischen beiden Fahrzeugen und ermittelt aus diesem den sicheren Mindestabstand. Wird dieser unterschritten, warnt das System bei aktivierter Warnfunktion den Fahrer.

Ist der Abstandsbetrieb vom Fahrer eingeschaltet, wird der Abstand zum vorausfahrenden Fahrzeug automatisch auf einen wählbaren Abstand eingeregelt. Per Tastendruck auf den Bedienschalter 9 wird eine gewünschte Geschwindigkeit und/oder der gewünschte Abstand eingestellt und gespeichert und vom System aufrechterhalten.

Bei Annäherung an ein langsameres Fahrzeug übernimmt der Mikrorechner 1 durch automatisches Schließen der Drosselklappe 13b eine Verringerung der Fahrzeuggeschwindigkeit und regelt so den eingestellten Sollabstand zum vorausfahrenden Fahrzeug, wobei der Sollabstand immer größer/gleich dem gesetzlich vorgegebenen Sicherheitsabstand ist. Neben dem automatischen Schließen der Drosselklappe 13b ist auch eine Einwirkung auf die Bremse 13a und/oder eine Ansteuerung der Getriebesteuerung 13c zur Verringerung der Fahrzeuggeschwindigkeit möglich. Ist die Fahrspur wieder frei, beschleunigt der Abstandsregler das Fahrzeug auf die eingestellte Maximalgeschwindigkeit. Bei einer Fahrzeugvorausfahrt ist immer die Abstandregelung aktiv.

Weiterhin ist der Mikrorechner 1 mit Schaltern der Fahrzeugbremse 10 beziehungsweise der Fahrzeugkupplung 11 verbunden. Werden diese vom Fahrer über das Kupplungs- und Bremspedal betätigt, bewirken sie im Normalbetrieb ein Abschalten der Regelung.

Im Mikroprozessor bildet eine Regelschaltung den Vergleich zwischen einem Soll- und Istwert eines in Software abgelegten Regelungskonzepts. Ist man im Regelbereich, so wird vom Mikrorechner ein Ausgangssignal ausgegeben, das vom Regelungskonzept ermittelt wird. Die Ansteuerung der Drosselklappe 13b, der Bremse 13a und/oder des Getriebes 13c erfolgt dabei über eine elektrische Endstufe 12.

Aus den von den Drehzahlsensoren 7', 8' erfaßten Drehzahlsignalen ermittelt die im Mikroprozessor 1 gebildete Einrichtung zur Fahrspurbestimmung die Gierrate $\dot{\varphi}$ des Kraftfahrzeuges. Die Gierrate bestimmt sich wie folgt:

$$\dot{\varphi} = \frac{\Delta\, v_{VR}}{s + v^2 \cdot k}$$

wobei

$\Delta\, v_{VR}$     die Geschwindigkeitsdifferenz der Vorderrädern des Kraftfahrzeuges,

s     die Spurbreite zwischen den Vorderrädern,

v     die Fahrzeuggeschwindigkeit,

k     der Dynamikkorrekturfaktor ist.

Mit Hilfe der so bestimmten Gierrate wird nun die Fahrspur des Kraftfahrzeuges aus dem Kurvenradius

$$R = \frac{v_R}{\dot{\varphi}}$$

berechnet.

Der von jedem Vorderrad gefahrene Radius bestimmt sich aus dem Quotienten der Radgeschwindigkeit $v_R$ dieses Vorderrades durch die Gierrate $\dot{\varphi}$.

Der Fahrkorridor wird als Funktion der Radien $R_R$ und $R_L$ des rechten und linken Vorderrades gebildet.

Die Breite des Fahrkorridors weist mindestens die Spurbreite der Räder auf.

Nachstehend soll die Bestimmung der Radgeschwindigkeit erläutert werden:

Die Inkrementscheiben 7 und 8, die jeweils an einem Vorderrad des Kraftfahrzeuges angeordnet sind, weisen beispielsweise eine gerade Anzahl von Unstetigkeiten auf. Bei der Drehung der Inkrementscheibe 7 bzw. 8 bewegen sich die Unstetigkeiten in einem vorgegebenen Abstand so an dem Hall-Sensor 7' bzw. 8' vorbei, daß der Magnetfluß zwischen der Scheibe 7 bzw. 8 und dem Sensor 7' bzw. 8' verändert wird. Das Ausgangssignal jedes HallSensors 7' bzw. 8' ist eine Impulsreihe, wobei die Vorderflanke beziehungsweise die Rückflanke der Impulse gezählt werden. Die Unstetigkeiten der Inkrementscheibe 7 bzw. 8 bilden dabei Gruppen, wobei jeder Gruppe eine gleiche Anzahl von Unstetigkeiten zugeordnet ist.

Bei beispielsweise 50 Unstetigkeiten n weist jede Gruppe i beispielsweise fünf Unstetigkeiten auf.

Ein Zeitgeber, vorzugsweise der im Mikroprozessor 1 enthaltene Schwingquarz, liefert ein aktuelles Zeitsignal.

Mittels den vom Radsensor 7', 8' in Abhängigkeit von den Unstetigkeiten erzeugten Impulse n werden in Abhängigkeit von der Vorderflanke des jeweiligen Impulses die aktuellen Zeitsignale in den Arbeitsspeicher 3 eingetragen. Der Arbeitsspeicher 3 des Mikroprozessors 1 weist so viele Registerplätze i auf, wie Gruppen i von Unstetigkeiten gewählt wurden.

Um die Speicherkapazität des Arbeitsspeichers 3 besser nutzen zu können, kann die Frequenz des Schwingquarzes heruntergeteilt werden.

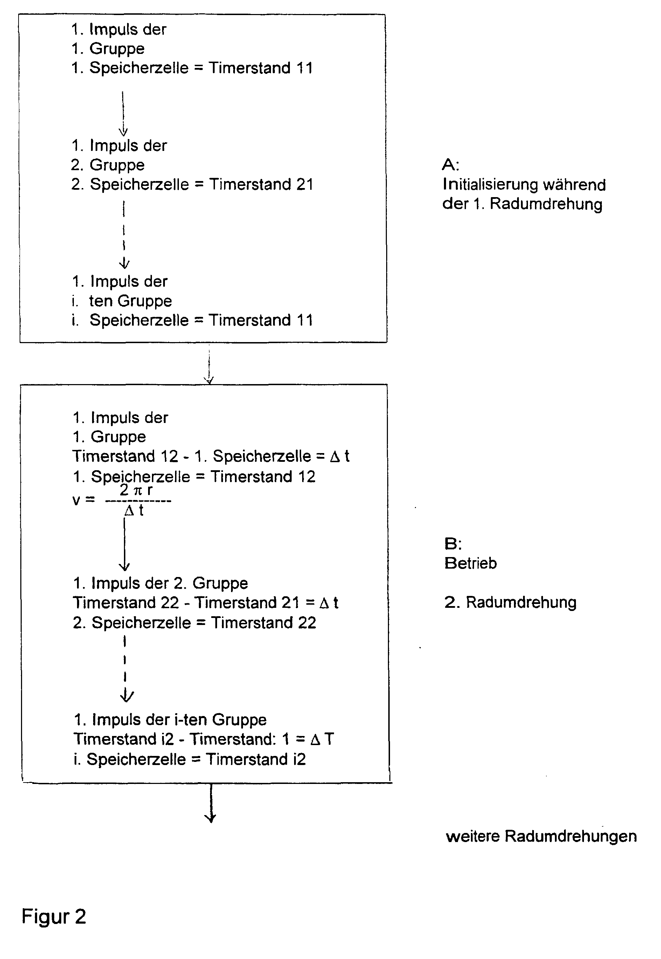

Anhand von Figur 2 soll das erfindungsgemäße Verfahren zur Bestimmung der Radgeschwindigkeit näher erläutert werden.

In einer Initialisierungsphase 1, die während der ersten Radumdrehung stattfindet, wird nach Auftreten des ersten Impulses der ersten Gruppe an Unstetigkeiten der aktuelle Stand 11 des Timers in das erste Register des Speichers 4 des Mikroprozessors eingetragen. Beim Auftreten des ersten Impulses der zweiten Gruppe von Unstetigkeiten wird der zu diesem Zeitpunkt aktuelle Timerstand 21 im zweiten Register des Speichers 4 abgelegt.

Dies erfolgt analog für jeden ersten Impuls der jeweiligen Gruppe. Beim ersten Impuls der i-ten Gruppe wird der aktuelle Timerstand i1 im i-ten Register des Speichers 4 abgespeichert. Die Initialisierung ist nach einer Radumdrehung abgeschlossen.

Während des normalen Betriebszustandes, welcher sich an die erste Radumdrehung anschließt, wird die Radgeschwindigkeit wie folgt bestimmt.

Beim Auftreten des Impulses der ersten Gruppe von Unstetigkeiten wird in der zweiten Radumdrehung zu diesem Zeitpunkt der abgespeicherte Timerstand 11 von dem zu diesem Zeitpunkt aktuellen Timerstand 12 abgezogen und mit Hilfe dieser Differenz $\Delta$ t die Radgeschwindigkeit v ermittelt.

$$v = \frac{2\,\pi\,r}{\Delta\,t}$$

wobei r den Radius des Rades darstellt.

Der Timerstand 11 wird gelöscht und der aktuelle Timerstand 12 in das erste Register 1 des Speichers eingetragen.

Beim Anliegen des ersten Impulses der zweiten Gruppe von Unstetigkeiten wird der abgespeicherte Timerstand 21 vom aktuellen Timerstand 22 abgezogen und wie beschrieben mit Hilfe dieser Differenz die augenblickliche Radgeschwindigkeit bestimmt. Der Timerstand 21 wird durch den Timerstand 22 überschrieben.

Dies erfolgt für jeden ersten Impuls jeder weiteren Gruppe von Unstetigkeiten bis die zweite Radumdrehung abgeschlossen ist.

Die erläuterte Verfahrensweise wiederholt sich bei jeder Radumdrehung, wobei immer der von der vorhergehenden Radumdrehung abgespeicherte Timerstand von dem aktuell anliegenden Timerstand jeder Gruppe abgezogen wird.

Die beschriebene Differenzbildung erfolgt nun alle fünf Impulse durch Vergleich des jeweils aktuell anliegenden Timerstandes mit dem in dem jeweiligen Register gespeicherten Timerstand. Durch diese Verfahrensweise ist die Bestimmung der Radgeschwindigkeit sehr schnell möglich.

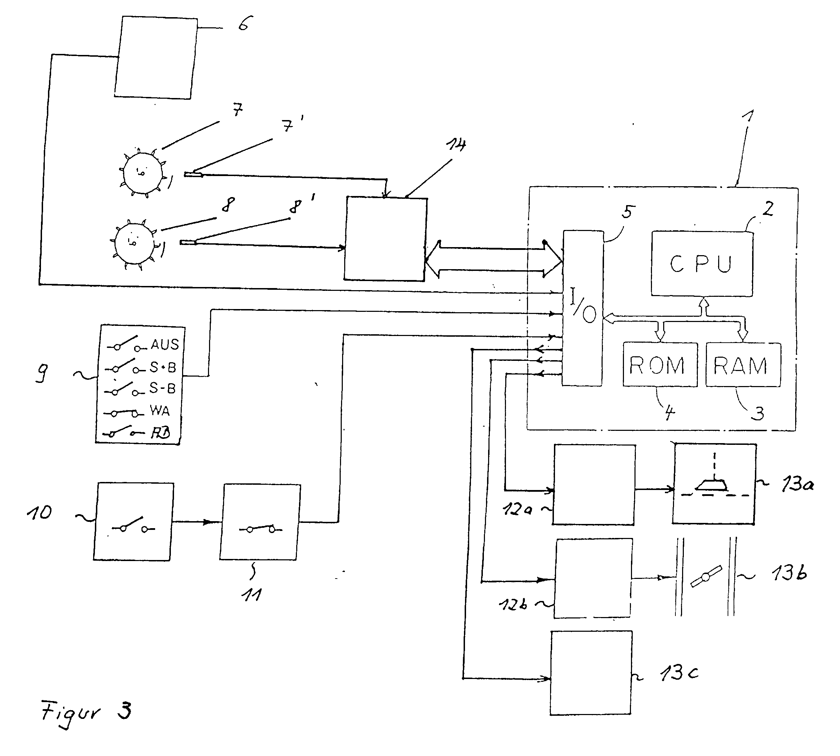

In einer anderen Ausführung (Figur 3) wird die Radgeschwindigkeit mit Hilfe der bereits im Kraftfahrzeug vorhandenen Drehzahlsensoren detektiert und nach dem beschriebenen Verfahren in einem ABS-Steuergerät 14, was ebenfalls im Fahrzeug vorhanden ist, bestimmt.

Das ABS-Steuergerät 14 hat dabei denselben Aufbau wie der Mikroprozessor 1, was nicht weiter dargestellt ist. Das Steuergerät 14 sendet die ermittelten Radgeschwindigkeiten über ein Bussystem, beispielsweise einen CAN-Bus an den Mikrorechner 1, der aus diesen Daten den Fahrkorridor bestimmt.

Da die Radgeschwindigkeit für beide Vorderräder unabhängig bestimmt wird, lassen sich Kurvenfahrten bzw. der Wechsel einer Fahrspur bei der vorausschauenden Berechnung des Fahrkorridors genau bestimmen. Die Genauigkeit der Vorhersage kann aber weiter verbessert werden, wenn die Radgeschwindigkeit für alle vier Räder des Fahrzeugs bestimmt wird.

**Patentansprüche**

1.  Verfahren zur vorausschauenden Bestimmung, eines Fahrkorridors eines Kraftfahrzeuges für ein automatisches Abstandsregelungs- oder kontrollsystem, bei welchem ein der Geschwindig-keit entsprechendes Signal zur Bestimmung eines Kurvenradius über die Gierrate des Kraftfahrzeugs Verwendet wird, wobei aus dem Kunvenradius der Fahrkorridor ermittelt wird und die Radgeschwindigkeiten von mindestens zwei Fahrzeugrädern gemessen werden, **dadurch gekennzeichnet, daß** die Gierrate des Fahrzeuges nach folgenden Formel berechnet wird:

$$\dot{\varphi} = \frac{\Delta\, v_{VR}}{s + v^2 \cdot k}$$

wobei

$\Delta\, v_{VR}$    die Geschwindigkeitsdifferenz der Vorderrädern des Kraftfahrzeuges,

s    die Spurbreite zwischen den Vorderrädern,

v    die Fahrzeuggeschwindigkeit,

k    der Dynamikkorrekturfaktor ist.

2. Verfahren nach Anspruch 1, **dadurch gekennzeichnet, daß** die Radgeschwindigkeit durch die Abtastung von am Umfang des Fahrzeugrades vorhandenen Unstetigkeiten erzeugt wird.

3. Verfahren nach Anspruch 2, **dadurch gekennzeichnet, daß** bei der Detektion jeder Unstetigkeit ein elektrischer Impuls erzeugt und gezählt wird, und ein Zeitraum bestimmt wird, in welchem die Impulse aller Unstetigkeiten des Rades genau einmal gezählt werden.

4. Verfahren nach Anspruch 3, **dadurch gekennzeichnet, daß** die die Unstetigkeit repräsentierenden Impulse in Gruppen eingeteilt werden und bei Auftreten des ersten Impulses einer jeden Gruppe eine neue Zeitmessung durch Zählung der Impulse über alle Unstetigkeiten ausgelöst wird.

5. Verfahren nach Anspruch 4, **dadurch gekennzeichnet, daß** die die Unstetigkeiten repräsentierenden Impulse in Gruppen gleicher Anzahl zusammengefaßt sind.

6. Verfahren nach einem der vorhergehenden Ansprüche, **dadurch gekennzeichnet, daß** nach dem Auftreten des Impulses der ersten Unstetigkeit einer jeden Gruppe eine Zeitinformation abgespeichert wird, nach dem wiederholten Auftreten des Impulses dieser ersten Unstetigkeit einer jeden Gruppe eine zweite Zeitinformation bestimmt wird, welche mit der ersten Zeitinformation verglichen wird und die Differenz der beiden Zeitinformationen zur Bestimmung der Radgeschwindigkeit genutzt wird.

7. Verfahren nach Anspruch 6, **dadurch gekennzeichnet, daß** beim Auftreten der zweiten Zeitinformation die erste Zeitinformation gelöscht und die zweite Zeitinformation gespeichert wird.

8. Anordnung zur Durchführung des Verfahrens nach Anspruch 1, **dadurch gekennzeichnet, daß** mindestens zwei Rädern des Kraftfahrzeuges je ein Inkrementgeber zugeordnet ist, der das jeweilige der Geschwindigkeit des Rades entsprechende Signal detektiert und dieser Sensor mit einen den Fahrkorridor für einen vorgegebenen Zeitraum des Kraftfahrzeuges bestimmenden Steuergerät verbunden ist und das Steuergerät einen Speicher mit mehreren Registern aufweist, welcher vom Signal eines Zählers steuerbar ist.

9. Anordnung nach Anspruch 8, **dadurch gekennzeichnet, daß** an jedem Fahrzeugrad ein Inkrementalgeber angeordnet ist, dem gegenüber jeweils ein mit dem Steuergerät verbundener Sensor angeordnet ist und das Steuergerät aus allen Signalen den Fahrzeugkorridor für eine vorgegebene Zeit bestimmt.

10. Anordnung nach einem der vorhergehenden Ansprüche, **dadurch gekennzeichnet, daß** die Sensoren Hall-Sensoren sind.

11. Anordnung nach einem der vorgegebenen Ansprüche 9 oder 10, **dadurch gekennzeichnet, daß** als Sensoren an sich im Fahrzeug vorhandene ABS-Sensoren verwendet werden.

**Claims**

1. Method for the predictive determination of a driving corridor of a motor vehicle for an automatic system for controlling or monitoring distance between vehicles, in which system a signal corresponding to the speed is used to determine a bend radius by means of the yaw rate of the motor vehicle, the driving corridor being determined from the bend radius and the wheel speed of at least two vehicle wheels being measured, **characterized in that** the yaw rate of the vehicle is calculated according to the following formula:

$$\dot{Q} = \frac{\Lambda v_{VR}}{S + V^2 \cdot k}$$

where:

$\Delta\, v_{VR}$    represents the difference in speed between the front wheels of the motor vehicle,

s represents the track width between the front wheels,

v represents the vehicle speed,

k represents the dynamic factor.

2. Method according to Claim 1, **characterized in that** the wheel speed is generated by sampling irregularities present at the circumference of the vehicle wheel.

3. Method according to Claim 2, **characterized in that** when each irregularity is detected an electrical pulse is generated and counted and a time period is determined in which the pulses of all the irregularities of the wheel are counted just once.

4. Method according to Claim 3, **characterized in that** the pulses representing the irregularity are divided into groups, and when the first pulse of each group occurs a new time measurement is triggered by counting the pulses over all the irregularities.

5. Method according to Claim 4, **characterized in that** the pulses representing the irregularities are combined in groups of equal number.

6. Method according to one of the preceding claims, **characterized in that**, after the occurrence of the pulse of the first irregularity of each group, a time information item is stored, after the repeated occurrence of the pulse of this first irregularity of each group a second time information item is determined, which is compared with the first time information item, and the difference between the two time information items is used to determine the wheel speed.

7. Method according to Claim 6, **characterized in that**, when the second time information item occurs, the first time information item is deleted and the second time information item is stored.

8. Arrangement for carrying out the method according to Claim 1, **characterized in that** at least two wheels of the motor vehicle are each assigned one incremental transmitter which detects the respective signal corresponding to the speed of the wheel and this sensor is connected to a control unit which determines the driving corridor for a predefined time period of the motor vehicle, and the control unit has a memory which has a plurality of registers and which can be controlled by the signal of a counter.

9. Arrangement according to Claim 8, **characterized in that** an incremental transmitter is arranged at each vehicle wheel and has in each case a sensor connected to the control unit arranged opposite said incremental transmitter, and the control unit determines the driving corridor for a predefined time from all the signals.

10. Arrangement according to one of the preceding claims, **characterized in that** the sensors are Hall sensors.

11. Arrangement according to one of the preceding Claims 9 or 10, **characterized in that** ABS sensors which are present in any case in the vehicle are used as the sensors.

## Revendications

1. Procédé de détermination anticipée d'un corridor de circulation d'un véhicule automobile pour un système de régulation ou de contrôle de l'espacement automatique, par lequel un signal, correspondant à la vitesse, est utilisé, via le taux de lacet du véhicule pour la détermination d'un rayon de virage, le corridor de circulation étant déterminé à partir du rayon de virage et la vitesse de roue étant mesurée sur au moins deux roues du véhicule, **caractérisé en ce que** le taux de lacet du véhicule est calculé d'après la formule suivante:

$$\dot{\varphi} = \frac{\Delta V_{VR}}{s + V^2 \cdot k}$$

dans laquelle

$\Delta V_{VR}$ est la différence de vitesse entre les roues avant du véhicule automobile,

s est l'écartement entre les roues avant,

V est la vitesse du véhicule,

k est le facteur de correction dynamique.

2. Procédé selon la revendication 1, **caractérisé en ce que** la vitesse de roue est produite par la détection de discontinuités à la périphérie de la roue de véhicule.

3. Procédé selon la revendication 2, **caractérisé en ce que**, lors de la détection de chaque discontinuité, une impulsion électrique est générée et comptée et on détermine un intervalle de temps pendant lequel les impulsions de toutes les discontinuités de la roue sont précisément comptées une seule fois.

4. Procédé selon la revendication 3, **caractérisé en ce que** les impulsions représentant la discontinuité sont classées en groupe et, lors de l'apparition d'une première impulsion de chaque groupe, on déclenche une nouvelle mesure de temps par un comptage des impulsions sur toutes les discontinuités.

**5.** Procédé selon la revendication 4, **caractérisé en ce que** les impulsions représentant les discontinuités sont regroupées en groupes de nombres identiques.

**6.** Procédé selon l'une des revendications précédentes, **caractérisé en ce que**, après apparition de l'impulsion de la première discontinuité de chaque groupe, on mémorise une information de temps, après survenance répétée de l'impulsion de cette première discontinuité de chaque groupe on détermine une deuxième information de temps, qui est comparée à la première information de temps, la différence entre les deux informations de temps étant utilisée pour déterminer la vitesse de la roue.

**7.** Procédé selon la revendication 6, **caractérisé en ce que**, lors de l'apparition de la deuxième information de temps, on efface la première information de temps et on mémorise la deuxième information de temps.

**8.** Dispositif de mise en oeuvre du procédé selon la revendication 1, **caractérisé en ce qu'**à au moins deux roues du véhicule automobile sont associées respectivement un transmetteur incrémentiel, détectant le signal respectif correspondant à la vitesse de la roue, ce transmetteur étant relié à un appareil de commande déterminant le corridor de circulation du véhicule automobile pour un intervalle de temps prédéterminé, et l'appareil de commande présentant une mémoire à plusieurs registres, mémoire pouvant être commandée par le signal venant d'un compteur.

**9.** Dispositif selon la revendication 8, **caractérisé en ce que** sur chaque roue de véhicule est disposé un transmetteur incrémentiel, en face duquel est chaque fois disposé un capteur relié à l'appareil de commande, l'appareil de commande déterminant, à partir de tous les signaux, le corridor de circulation pour une durée prédéterminée.

**10.** Dispositif selon l'une des revendications précédentes, **caractérisé en ce que** les capteurs sont des capteurs à effet Hall.

**11.** Dispositif selon l'une des revendications 9 ou 10 précédentes, **caractérisé en ce qu'**on utilise comme capteurs des capteurs ABS disponibles dans le véhicule.

Figur 1

1. Impuls der
1. Gruppe
1. Speicherzelle = Timerstand 11

1. Impuls der
2. Gruppe
2. Speicherzelle = Timerstand 21

1. Impuls der
i. ten Gruppe
i. Speicherzelle = Timerstand 11

A:
Initialisierung während
der 1. Radumdrehung

1. Impuls der
1. Gruppe
Timerstand 12 - 1. Speicherzelle = $\Delta$ t
1. Speicherzelle = Timerstand 12
$$v = \frac{2 \pi r}{\Delta t}$$

1. Impuls der 2. Gruppe
Timerstand 22 - Timerstand 21 = $\Delta$ t
2. Speicherzelle = Timerstand 22

1. Impuls der i-ten Gruppe
Timerstand i2 - Timerstand: 1 = $\Delta$ T
i. Speicherzelle = Timerstand i2

B:
Betrieb

2. Radumdrehung

weitere Radumdrehungen

Figur 2

Figur 3

EP 0 849 109 B1